# EUROPÄISCHE PATENTANMELDUNG

(11) **EP 4 760 573 A1**
(43) Veröffentlichungstag der Anmeldung: **17.06.2026**
(21) Anmeldenummer: 24220256.2
(22) Anmeldetag: 16.12.2024
(51) Int. Cl.: G06F 21/62, G06F 21/84, H04N 5/913, G06F 21/55

(54) **VERFAHREN UND ANORDNUNG ZUM SCHUTZ VOR BILDAUFNAHMEN EINES SCHÜTZENSWERTEN INHALTS**

(71) Anmelder: Siemens Aktiengesellschaft, 80333 München (DE)
(72) Erfinder: Gehmeyr, Andreas, 36039 Fulda (DE)
(74) Vertreter: Siemens Patent Attorneys

(57) **Zusammenfassung**

Verfahren und Anordnung zum Schutz vor Bildaufnahmen eines schützenswerten Inhalts

Die Erfindung betrifft ein Verfahren zum Schutz vor Bildaufnahmen eines schützenswerten Inhalts bei dem ein
a) Erfassen von zumindest Teilen eines einen Blick auf den schützenswerten Inhalt erlaubenden Bereichs durch zumindest einen Sensor,
b) Weiterleiten von zumindest Teilen der erfassten Sensordaten an ein KI-Modul,
c) Auswerten der Sensordaten durch das KI-Modul zur Ermittlung von zumindest mit einer Anwesenheit und/oder Ausrichtung einer, beispielsweise als digitale, insbesondere in einem Handy integrierten, ersten Kamera ausgestalteten, Bildaufnahmevorrichtung korrelierenden Daten,
d) Durchführen einer Unterdrückungsaktion in Abhängigkeit der Datenauswertung derart, dass eine Bildaufnahme des schützenswerten Inhalts unterbunden wird, wenn die Datenauswertung auf einen unerlaubten Aufnahmevorgang zumindest hinweist,
erfolgt. Ferner betrifft die Erfindung eine Anordnung zur Durchführung des Verfahrens zum Schutz vor Bildaufnahmen eines schützenswerten Inhalts.

## Beschreibung

Die Erfindung betrifft ein Verfahren zum Schutz vor Bildaufnahmen eines schützenswerten Inhalts gemäß dem Oberbegriff des Anspruchs 1 sowie eine Anordnung zum Schutz vor Bildaufnahmen eines schützenswerten Inhalts gemäß dem Oberbegriff des Anspruchs 17.

Es ist bekannt, dass Anwender von computergestützten Systemen grundsätzlich in der Lage sein können, Inhalte von Bildschirmen, beispielsweise mittels eines so genannten Screenshots, aufzunehmen. Dadurch können schützenswerte Inhalte, die Rechte Dritter betreffen, beispielsweise Datensouveränitätsrichtlinien, Know-How-Schutz-, Datenschutz- und/oder Persönlichkeitsrechte, verletzt werden.

Hierzu ist es bekannt, dass Screenshots vom Bildschirminhalt über das Betriebssystem softwaretechnisch verhindert werden können. Dies schützt aber nicht dagegen, dass Nutzer eine Aufnahme mit einer externen Kamera machen.

Bekannte technische Maßnahmen, die Kameraaufnahmen externer Kameras verhindern sollen, sind:
- Blickschutzfilter, die vor seitlichen Fotografien schützen
- Gegenblitze, welche bei Erkennen von Blitzen, die durch eine Kamera unberechtigter Personen ausgelöst werden, eine Überbelichtung durch einen Gegenblitz ausführen

Nachteilig an Blickschutzfiltern ist, dass sie gegen Frontalaufnahmen nur insoweit einen Schutz bieten, als ein vor dem Bildschirm sitzender Nutzer diesen verdeckt. Ist der Bildschirm zumindest teilweise frontal einsehbar, sind Daten zumindest teilweise erfassbar.

Die auf Gegenblitzen beruhende Lösung schützt nur insoweit Blitze erkannt werden, so dass, je nach gegebenen Lichtverhältnissen, durch Aufnahmen ohne Blitz, die folglich auch nicht erkannt werden können, ebenfalls ein zumindest teilweises Erkennen von Inhalten nicht ausgeschlossen werden kann.

Die der Erfindung zugrundeliegende Aufgabe besteht darin eine technische Lösung anzubieten, die Nachteile des Standes der Technik überwindet, insbesondere ein Verfahren und eine Anordnung anzugeben, die unerlaubte Aufnahmen von schützenswerten Inhalten verhindert.

Diese Aufgabe wird ausgehend von dem Verfahren gemäß den Merkmalen nach dem Oberbegriff des Anspruchs 1 durch dessen kennzeichnende Merkmale, sowie durch die Anordnung gemäß den Merkmalen nach dem Oberbegriff des Anspruchs 17 durch dessen kennzeichnende Merkmale gelöst.

Sofern es in der nachfolgenden Beschreibung nicht anders angegeben ist, beziehen sich die Begriffe "durchführen", "umsetzen", "transformieren", "übertragen", "berechnen", "rechnergestützt", "rechnen", "feststellen", "generieren", "konfigurieren", "rekonstruieren", "ermitteln", "erfassen" und dergleichen - sofern genannt - vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" bzw. "Rechner" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" oder "computergestützt" - sofern genannt - kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor - sofern genannt - kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit", "Speichereinrichtung" oder einem "Speichermodul" und dergleichen - sofern genannt - kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger sowie eine Kombination aus einem oder mehreren dieser Elemente zur Bildung einer so genannten Cloud verstanden werden.

Unter einem "Modul" kann - sofern genannt - im Zusammenhang mit der Erfindung beispielsweise mindestens ein Prozessor und/oder mindestens eine Speichereinheit zum Speichern von Programmbefehlen verstanden werden, welche physisch an einem Ort, beispielsweise einem Teil einer Leiterplatte, funktional zusammenwirkend verbunden sind. Beispielsweise ist der Prozessor speziell dazu eingerichtet, die Programmbefehle derart auszuführen, dass der Prozessor Funktionen ausführt, um das erfindungsgemäße Verfahren oder einen Schritt des erfindungsgemäßen Verfahrens zu implementieren oder realisieren.

Bei dem erfindungsgemäßen Verfahren zum Schutz vor Bildaufnahmen eines schützenswerten Inhalts erfolgt ein
a) Erfassen von zumindest Teilen eines einen Blick auf den schützenswerten Inhalt erlaubenden Bereichs durch zumindest einen Sensor,
b) Weiterleiten von zumindest Teilen der erfassten Sensordaten an ein KI-Modul,
c) Auswerten der Sensordaten durch das KI-Modul zur Ermittlung von zumindest mit einer Anwesenheit und/oder Ausrichtung einer, beispielsweise als digitale, insbesondere in einem Handy integrierten, ersten Kamera ausgestalteten, Bildaufnahmevorrichtung korrelierenden Daten,
d) Durchführen einer Unterdrückungsaktion in Abhängigkeit der Datenauswertung derart, dass eine Bildaufnahme des schützenswerten Inhalts unterbunden wird, wenn die Datenauswertung auf einen unerlaubten Aufnahmevorgang zumindest hinweist.

Durch die Schritte des erfindungsgemäßen Verfahrens wird eine die Nachteile des Standes der Technik überwindende Lösung beschrieben. Dies wird unter anderem durch den Einsatz des Sensors erzielt. Dieser stellt nämlich eine Möglichkeit der Überwachung des Umfelds der Wiedergabe des schützenswerten Inhalts dar, und zwar diesen Teil des Umfelds, in dem es möglich ist, eine Kamera zu nutzen, um den Inhalt unerlaubt aufzunehmen. Hierdurch werden die eingangs beschriebenen Möglichkeiten, unbemerkt aufzunehmen, weiter reduziert. Durch die Kombination aus durch einen Sensor erfassten Daten und des KI-Moduls kann die Überwachung zudem zu akkuraten Ergebnissen beitragen, so dass prinzipiell Sensoren beliebiger Eigenschaften eingesetzt werden können, da durch ein auf den Sensor entsprechend ausgerichtetes, insbesondere trainiertes, KI-Modul die Auswertung der Sensordaten, insbesondere die Zuverlässigkeit des Hinweises, verbessert werden kann.

Die erfindungsgemäße Anordnung zum Schutz vor Bildaufnahmen eines schützenswerten Inhalts ist gekennzeichnet durch Mittel zur Durchführung des Verfahrens und/oder eine seiner Weiterbildungen, womit sie zur Implementierung und mutatis mutandis damit zur Realisierung der im Zusammenhang mit dem Verfahren zum Schutz vor Bildaufnahmen eines schützenswerten Inhalts genannten Vorteile beiträgt.

Weitere vorteilhafte Ausgestaltungen und Weiterbildungen der Erfindung sind durch die Unteransprüche angegeben.

Gemäß einer ersten Weiterbildung des erfindungsgemäßen Verfahrens wird der Sensor derart betrieben, dass eine künstliche Infrarotlichtquelle detektiert werden kann. Hiermit werden Kameras detektiert, die zur Sicherstellung von genügend Helligkeit ein minimales Ausstrahlen von Licht durchführen. Diese Ausstrahlung ist in der Regel als eine punktförmige Infrarotquelle erfassbar. In Kombination mit dem KI-Modul kann dann beispielsweise allein das Vorhandensein eines solchen Musters und/oder eine über die Zeit erfasste (Positions)Änderung dieser punktförmigen Quelle als Basis für den Hinweis auf unerlaubte Aufnahme dienen.

Alternativ oder ergänzend kann das erfindungsgemäße Verfahren derart weitergebildet werden, dass eine Blitzvorrichtung derart betrieben wird, dass sie zumindest temporär, insbesondere zu sich wiederholenden Zeitpunkten, ausgelöst wird, wobei der Sensor derart mit den Auslösezeitpunkten synchron betrieben wird, dass Reflektionen des Blitzes erfasst werden.

Diese Weiterbildung nutzt die erfindungsgemäße Sensor-Kl Kombination aus, um Muster bei der Reflektion zu erkennen, die auf eine aufnahmebereite Linse und/oder die Ausrichtung einer Linse auf den schützenswerten Inhalt schließen lassen und stellt durch die Blitzeinrichtung sicher, dass eine bekannte Lichtquelle mit zu bekannten Zeiten ausgelösten Blitzen als feste Größe bei der Ermittlung der Reflektion im Rahmen einer Auswertung durch das KI-Modul bekannt ist, so dass das KI-Modul die Reflektionen von zufälligen Lichtreflexionen unterscheiden kann. In Ergänzung zu anderen Ansätzen, wie dem Erfassen von Infrarotlicht durch den Sensor, kann es beispielsweise erlauben, den Bereich einzugrenzen, indem eine punktförmige Infrarotquelle auf eine Aufnahme hinweist.

Vorzugsweise wird das erfindungsgemäße Verfahren derart weitergebildet, dass das Erfassen derart durchgeführt wird, dass als Sensor mindestens eine Linse einer zweiten Kamera derart betrieben wird, dass die Kameralinse zumindest temporär in einem ersten Zeitraum, insbesondere zu diskreten Zeitpunkten, zumindest eine Aufnahme von dem Bereich macht, wobei als Sensordaten die Aufnahme an das KI-Modul weitergeleitet wird, wobei der erste Zeitraum zumindest teilweise mit einer gegebenen Wiedergabe des Inhalts übereinstimmt.

Zum einen erlaubt diese Weiterbildung die Nutzung gängiger bzw. ohnehin vorhandener Peripheriegeräte wie Kameras und reduziert damit Kosten bei dem Einsatz des Verfahrens, und zum anderen nutzt sie die Eigenschaft dieser Kameras aus, die genannten Kameralichtquellen als hellen Punkt in einer Aufnahme sichtbar zu machen. Dies funktioniert vor allem, wenn die Aufnahme in einem dunklen Raum erfolgt, gelingt aber durch den Einsatz des KI-Moduls auch in hellerer Umgebung, da ein KI-Modul auch für das menschliche Auge nicht mehr erkennbare Veränderungen von Pixelhelligkeiten detektieren kann und somit in der Lage ist, einen Hinweis auf punktförmige Infrarotquellen zu generieren.

Vorzugsweise kann das erfindungsgemäße Verfahren derart weitergebildet werden, dass als den Sensor betreibende zweite Kamera mindestens eine zumindest funktional mit einer den schützenswerten Inhalt wiedergebenden Einrichtung verbundene Kamera zur Erfassung zumindest temporär betrieben wird. Durch die funktionale Verbindung kann die Steuerung, insbesondere durch einen Prozessor der Einrichtung, gemeinsam erfolgen und so zumindest der Erfassungsschritt-, wenn nicht sogar der Schritt des Aufrufens des KI-Moduls und/oder der Auswertung, durch die Steuereinrichtung der wiedergebenden Einrichtung durchgeführt werden.

Bei einer weiteren Weiterbildung des erfindungsgemäßen Verfahrens wird die zweite Kamera derart platziert und betrieben, dass die Kamera im Bezug zum schützenswerten Inhalt derart platziert und betrieben wird, dass sie zumindest Teile des schützenswerten Inhalts erfassen kann. D.h. die bzw. zumindest eine der zweiten Kameras ist bei dieser Weiterbildung nicht notwendigerweise Teil der wiedergebenden Einrichtung. Diese Weiterbildung ist beispielsweise dann vorteilhaft einsetzbar, wenn die Kamera ein externes Peripheriegerät ist und/oder in einem Umfeld eingesetzt wird, in dem beispielsweise Überwachungskameras installiert sind, die zur Erkennung beitragen können.

Alternativ oder ergänzend kann das erfindungsgemäße Verfahren derart weitergebildet sein, dass die zweite Kamera derart im Bezug zu der Einrichtung platziert wird und, insbesondere physisch mit ihr verbunden, derart betrieben wird, dass die mindestens eine Linsenöffnung in der gleichen Ebene angeordnet ist wie die Wiedergabe des schützenswerten Inhalts.

Vorzugsweise wird das erfindungsgemäße Verfahren derart weitergebildet, dass die Ermittlung von zumindest mit einer Anwesenheit und/oder Ausrichtung einer Bildaufnahmevorrichtung korrelierenden Daten derart erfolgt, dass das KI-Modul ein trainiertes, insbesondere multimodales, LLM derart betreibt, dass es mit einem zumindest aus den Sensordaten gebildeten Prompt derart aufgerufen wird, dass eine Vorhersage über die Anwesenheit und/oder Ausrichtung ausgegeben wird.

Durch ein Training lassen sich auch sehr subtile, für den Menschen unmerkliche Muster, die auf einen Aufnahmevorgang hinweisen, feststellen und so die Vorhersagequalität verbessern. Das Training kann dabei im Vorfeld geschehen, aber auch durch ein Finetuning, etwa durch Rückmeldung von fehlerhaften oder richtigen Hinweisen, im Betrieb fortgesetzt werden.

Das KI-Modul kann alternativ oder ergänzend auch andere generative KI-Modelle betreiben, also alternativ oder in Kombination mit einem LLM. Beispielsweise ist auch ein Einsatz von generativen KI-Modellen denkbar, die Videos, Bilder und/oder Musik generieren. Insbesondere für die Erkennung von Aufnahmen sind alternativ oder ergänzend also auch so genannte diskriminative KI geeignet, da sie sich der Klassifikation und Erkennung widmen und damit zumindest für den erfindungsgemäßen Zweck der Aufnahmeanalyse sehr gut trainiert sind. LLMs, insbesondere die multimodalen, bieten nicht zuletzt aufgrund ihrer Beliebtheit vielfältige Einsatzmöglichkeiten und sind damit unter Umständen günstig und mit wenig Aufwand für den erfindungsgemäßen Zweck einsetzbar.

Dabei kann das erfindungsgemäße Verfahren gemäß einer Weiterbildung auch derart durchgeführt werden, dass das LLM derart trainiert wird, dass es eine den Bereich des schützenswerten Inhalts zumindest teilweise erfassende Kameralinse der ersten Kamera vorhersagt. Hierdurch kann erreicht werden, dass auch wirklich nur eine Inhaltsunterbindung ausgelöst wird, wenn eine Aufnahmemöglichkeit gegeben ist, die zumindest Teile des schützenswerten Inhalts erfasst. Somit würden nicht auf den Inhalt gerichtete Aufnahmegeräte außen vor bleiben und unbegründete Unterbrechungen der Darstellung vermieden werden.

Alternativ oder ergänzend kann das erfindungsgemäße Verfahren derart weitergebildet werden, dass das LLM derart trainiert wird, dass die Vorhersage des Bereichs zumindest durch eine anhand der Bildaufnahme detektierte Reflexion eines, insbesondere durch eine ortsfeste Quelle, beispielsweise die Blitzeinrichtung, emittierten Lichts erfolgt. Mit dieser Weiterbildung ist es möglich, auch ohne eine feste Quelle beispielsweise allein durch die gegebenen Lichtverhältnisse verursachte Reflexionen zu nutzen, um Kameralinsen zu entdecken, da eine KI wie erwähnt subtile Veränderung auf Pixelebene erfassen kann. Mit einer festen Quelle wie der genannten Blitzvorrichtung kann diese Eigenschaft in Verbindung mit der Blitzvorrichtung derart vorteilhaft genutzt werden, dass der Blitz keine besonders starke Helligkeit eingestellt hat bzw. sehr schwach ausgeprägt und somit angenehmer ausgestaltet sein kann und dennoch zu akkurater Erkennung führen kann, wobei diese Weiterbildung ebenfalls alternativ oder ergänzend vorgesehen sein kann.

Aufgrund der Möglichkeit subtilste Veränderungen auf Pixelebene einer Aufnahme bzw. Muster in den Sensordaten zu erkennen, ist die Weiterbildung des erfindungsgemäßen Verfahrens vorteilhaft, bei dem das LLM derart trainiert wird, dass es den Betriebszustand der Kameralinse der ersten Kamera vorhersagt. Es also trainiert wird, allein durch die Erfassung der Linse einen Rückschluss darauf zu ziehen, dass die Kamera gerade filmt.

Ebenfalls alternativ oder ergänzend kann das erfindungsgemäße Verfahren derart weitergebildet werden, dass die LLM derart trainiert wird, dass die Vorhersage des Betriebszustands mindestens anhand von in der Bildaufnahme detektierbaren Infrarotpunkten erfolgt.

Eine weitere alternative oder ergänzende Weiterbildung ist gegeben, wenn das erfindungsgemäße Verfahren derart weitergebildet wird, dass eine zur zweiten Kamera disjunkte, mit einer Einrichtung zur Steuerung, zu deren Steuerung und/oder Bildauswertung verbundene, weitere Kamera derart betrieben wird, dass sie das LLM mit Aufnahmen derart aufruft, dass das LLM eine Vorhersage über die Anwesenheit und/oder Ausrichtung der ersten Kamera trifft.

Dies ist insbesondere bei im Raum vorhandenen Überwachungskameras vorteilhaft einsetzbar, wie sie beispielsweise in einem industriellen Umfeld anzutreffen sind. Diese Kameras können die zweite Kamera ergänzen und beispielsweise, wenn die Sicht der zweiten Kamera auf die erste Kamera, beispielsweise durch eine Bedienperson, verdeckt sein könnte, dennoch bereits eine Unterbindung der Darstellung des zu schützenden Inhalts auslösen, bevor die Bedienperson zur Seite geht, den Inhalt damit offenbart und die zweite Kamera erst jetzt die erste Kamera aufnehmen kann.

Vorzugsweise wird das erfindungsgemäße Verfahren derart weitergebildet, dass die Unterdrückungsaktion derart erfolgt, dass die den schützenswerten Inhalt wiedergebende Einrichtung derart manipuliert wird, dass solange ein Hinweis auf eine unerlaubte Aufnahme besteht, die Wiedergabe des zu schützenden Inhalts ausbleibt.

Hierdurch ist eine einfache und schnelle Methode gegeben, die Aufnahme des Inhalts zu unterbinden.

Bei einer weiteren Weiterbildung kann das erfindungsgemäße Verfahren derart weitergebildet werden, dass die Unterdrückungsaktion mit folgenden Schritten durchgeführt wird:
a) Identifizieren einer Kommunikationsverbindung zu der ersten Kamera,
b) Bilden einer zumindest mit einem Steuersignal korrelierenden Nachricht,
c) Versenden der korrelierenden Nachricht,
d) Empfangen der korrelierenden Nachricht durch eine zur Beeinflussung der Funktion der ersten Kamera ausgebildete Einrichtung,
e) Manipulieren der Funktion durch die beeinflussende Einrichtung derart, dass das Bilden einer den Inhalt wiedergebenden Aufnahme verhindert wird.

Diese Weiterbildung ist besonders dort von Vorteil, wo Unterdrückungsfunktionen vorgesehen sind. Beispielsweise könnte diese Weiterbildung dann geeignet sein, wenn Smartphones so ausgestaltet sind, dass zum Schutz von Privatsphäre, eine Manipulierungsfunktion vorgesehen ist, die es erlaubt, dass die Kamera und/oder generell die Funktion des Smartphones von externen Einrichtungen unterbunden werden kann.

Wird das erfindungsgemäße Verfahren derart weitergebildet, dass bei vorliegendem Hinweis auf unerlaubte Aufnahme mindestens ein Warnsignal visuell, insbesondere auf der wiedergebenden Einrichtung, und/oder akustisch über eine Lautsprechereinrichtung ausgegeben wird, kann autorisiertes Personal sich der Situation entsprechend einbringen und beispielsweise klären, ob ein unerlaubter Aufnahmevorgang stattfindet, und dann entsprechende Maßnahmen ergreifen.

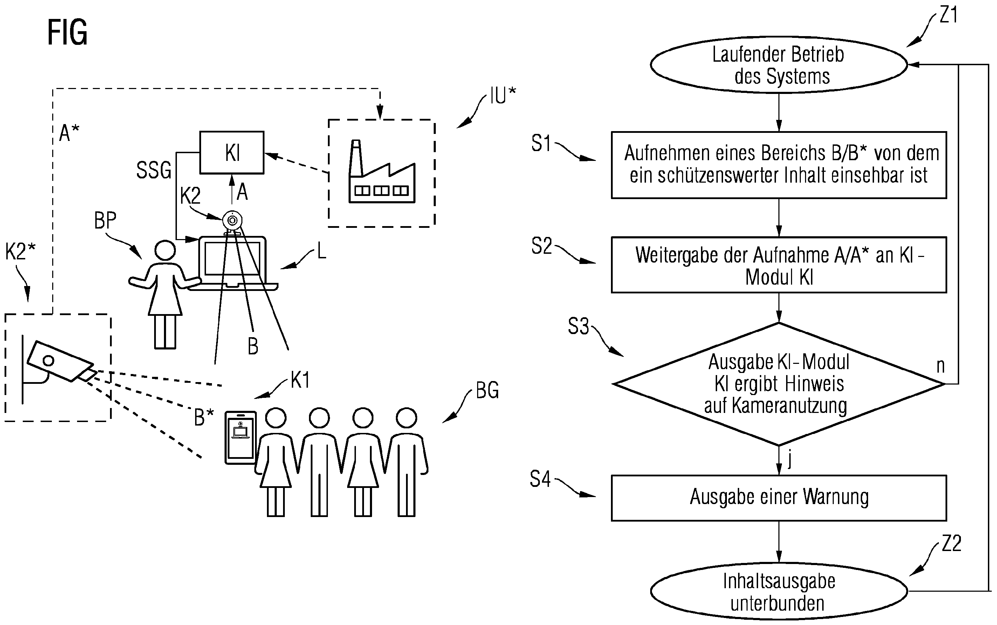

Im Folgenden werden weitere Vorteile und Details der Erfindung sowie Weiterbildungen der Erfindung anhand eines in der einzigen Figur dargestellten Ausführungsbeispiels näher erläutert. Es zeigt die
- Figur (FIG): schematisch einen beispielhaften Ablauf des computerimplementierten Verfahrens zum Testen einer Benutzererfahrung zumindest eines Teils, insbesondere der Nutzerschnittstelle, einer Software.

Bei dem im Folgenden in der Figur (FIG) erläuterten Ausführungsbeispiel handelt es sich um eine bevorzugte Ausführungsform, anhand dessen Vorteile sowie weitere Ausführungsformen bzw. Weiterbildungen der Erfindung näher erläutert werden.

Insbesondere zeigen die nachfolgenden Erläuterungen lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis der unabhängigen Ansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

Bei dem Ausführungsbeispiel bzw. den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar.

In der einzigen Figur FIG sind schematisch sowohl Ausführungsbeispiele für die erfindungsgemäße Anordnung als auch als ein Ausführungsbeispiel des erfindungsgemäßen Verfahrens ein Ablaufdiagramm zu erkennen.

Auf der linken Seite der Figur ist schematisch und vereinfacht ein Ausführungsbeispiel der erfindungsgemäßen Anordnung dargestellt.

Zu erkennen ist ein Laptop L, auf dem ein zu schützender Inhalt dargestellt werden kann. Ferner eine Bedienperson BP, die beispielsweise im Rahmen einer Vorführung für eine Besuchergruppe BG solche Inhalte abrufen würde.

Es ist ferner angedeutet, dass eine Person der Besuchergruppe BG ein Smartphone mit einer ersten Kamera K1 auf den Laptop L richtet, so dass der Laptop L aufgenommen wird.

Da sich die Besuchergruppe BG in einem Bereich B, B* aufhält, von dem aus mit Hilfe einer Kamera K1 der Inhalt auf dem Laptop L erfassbar wäre, ist für die Überwachung des Bereichs B, B* gemäß dem Ausführungsbeispiel der Anordnung, aber auch dem Ausführungsbeispiel des Verfahrens der Betrieb einer zweiten Kamera K2, K* vorgesehen.

Dabei kann die gemäß einer ersten Ausführungsform mit dem Laptop L verbundene zweite Kamera K2 genutzt werden. In der Regel wird dies eine im Laptop integrierte Kamera sein. Es kann aber auch eine externe, alternativ oder ergänzend angeschlossene periphere Kamera sein. Diese ist dann derart angeordnet, dass ihre Linse(n) in derselben Ebene wie der darzustellende Inhalt, also die Bildschirmfläche des Laptops L, angeordnet ist bzw. parallel hierzu. Aus dieser Ebene kann also direkt gegenüber vom Inhalt ein erster Bereich B aufgenommen werden. Hierdurch besteht die Möglichkeit, direkt die Linse(n) der ersten K1 des Smartphones zu erfassen. Dies ist auch vorteilhaft, wenn keine Smartphones genutzt werden, sondern lediglich eine Mikrokamera, von der allein die Mikrolinse sichtbar wäre.

Alternativ oder ergänzend und daher gestrichelt dargestellt, kann eine (weitere) zweite Kamera K2* versetzt einen zweiten Bereich B* aufnehmen. Beispielsweise kann es sich bei dieser zweiten Kamera K2* um eine Überwachungskamera in einem industriellen Umfeld IU handeln, wie in dem Ausführungsbeispiel durch die Kommunikation mit dem Fabrikpiktogramm IU dargestellt werden soll.

In einem industriellen Umfeld IU ist in der Regel die Nutzung von Smartphones bzw. Kameras K1 verboten. Zumindest gilt dies für Besuchergruppen BG. In einem solchen Umfeld genügt es daher, bereits überhaupt die Anwesenheit eines Smartphones mit Kamera K1 zu erkennen. Daher wäre die versetzte, also nicht von einem direkt gegenüberliegenden Punkt durchgeführte, Überwachung allein und/oder ergänzend gemäß der Erfindung denkbar.

Bei der Überwachung werden Aufnahmen A, A* des ersten Bereichs B und/oder zweiten Bereichs B* gemacht. Wenn nur die zweite Kamera K2 des Laptops L implementiert ist, wird dies eine erste Aufnahme A sein, wird eine weitere zweite Kamera K2* alternativ oder ergänzend genutzt, wird eine zweite Aufnahme A* erzeugt.

Die Aufnahmen können dabei als Videoaufnahme, also einer kontinuierlichen Sequenz von Aufnahmen A, A* ausgeführt werden und/oder in diskreten Zeitabständen als Einzelbildaufnahmen A, A* erzeugt werden.

Nach der Erzeugung werden die Aufnahmen A, A* an ein KI-Modul KI geleitet. Dieses KI-Modul KI betreibt ein KI-Modell, beispielsweise insbesondere ein multimodales LLM. Es kann ein vortrainiertes Standard-LLM, wie Chat-GPT, genutzt und darauf trainiert werden, die Aufnahmen auf Hinweise zu untersuchen, dass eine Kamera und/oder Kameralinse auf den Laptop L gerichtet ist.

Die einem industriellen Umfeld IU zugeordnete Kamera K2* würde die Aufnahme in der Regel an eine dem industriellen Umfeld IU zugeordnete Steuerreinrichtung senden, so dass deren Aufnahmen A* im dargestellten Beispiel über den Umweg des industriellen Umfelds IU an das KI-Modul KI gesandt werden. Denkbar ist auch, dass das KI-Modul KI im industriellen Umfeld IU in eine dortige Steuerung integriert ist bzw. ihr zugeordnet ist und/oder im Laptop L integriert bzw. durch dessen Steuerung, beispielsweise durch Bereitstellen eines SW-Klienten, der Zugriffe auf ein LLM ermöglicht, realisiert ist.

Da gängige LLMs alle Pixel erfassen würden, ist sie in der Lage subtile Veränderungen zu erkennen, die darauf hinweisen, dass eine Kamera(linse) aufnahmebereit ist bzw. aufnimmt. Hier müsste ein Training mit Feedback mit Labeln, ob ein positiver Hinweis, also Hinweis auf Kamera, richtig ist, eingesetzt werden.

Denkbar ist es aber auch individuell trainierte LLMs einzusetzen. Das Training wird erfindungsgemäß dabei auf zumindest einem der folgenden Indikatoren oder einer Kombination erfolgen:
Eine Helligkeitsänderung insbesondere von in einem Infrarotmodus aufgenommenen Aufnahmen in einem sehr kleinen, insbesondere punktuellen Bereich, Reflexionen, Objekte, die auf ein Smartphone, eine Kamera, eine Kameralinse deuten, ungewöhnliche Bewegungen/Haltungen von Personen, die sich gegenüber dem Laptop L befinden usf., wobei für die Untersuchung auf Reflexionen auch denkbar ist, dass die Anordnung um eine Blitzeinrichtung ergänzt ist, die synchronisiert mit den zweiten Kameras K2, K2* Blitze erzeugt, so dass man nicht auf zufällige Lichtquellen für Reflexionen angewiesen ist und bei der Auswertung weniger Freiheitsgrade vorhanden sind, so dass die Nutzung von Reflexionen zur Auswertung akkuratere Ergebnisse liefern kann.

Zudem kann aufgrund des erfindungsgemäßen Einsatzes der KI die Helligkeit des Blitzes derart gesenkt werden, dass sehr subtile Blitze erzeugt werden, weil die KI auch vom menschlichen Auge kaum wahrnehmbare Reflexionen bemerken kann, so dass dies die Anwesenden Personen BP, BG nicht stört.

Wenn nun die derart trainierte KI einen solchen Hinweis entdeckt, erzeugt sie gemäß dem Beispiel ein Steuersignal SSG oder eine ein im Laptop erzeugtes Steuersignal generierende Nachricht, welches dazu führt, dass ein Alarm ausgelöst wird und die Darstellung auf dem Bildschirm unterbunden, d.h. der Bildschirm des Laptops L, dunkel geschaltet wird.

Die Erfindung ist aber nicht auf den Einsatz von LLM als KI eingeschränkt, vielmehr kann das im Rahmen dieser Offenbarung genannte erfindungsgemäße KI-Modul auch ein oder mehrere alternative Implementierungen umfassen, die eine künstliche Intelligenz verwirklichen, welche in der Lage ist, die genannten Funktionen zu erfüllen.

Ein Ausführungsbeispiel des erfindungsgemäßen Verfahrens könnte schematisch also wie folgt zusammengefasst werden:
Ausgehend von einem ersten Zustand Z1, in dem ein laufender Betrieb des Laptops L bzw. beispielsweise der Vorführung erfolgt, wird in einem ersten Schritt S1 eine Aufnahme A von einem ersten Bereich B oder eine aus anderen Blickwinkeln erfolgende weitere Aufnahme A* von einem zweiten Bereich B* erzeugt.

In einem zweiten Schritt S2 erfolgt dann eine Weitergabe der Aufnahmen A, A* an ein KI-Modul KI. Es kann sich dabei um eine Bildsequenz, insbesondere Videoaufnahmen, um Einzelbilder und/oder eine kontinuierliche Aufnahme handeln, so dass das KI-Modul diese Bildsequenz an eine LLM zumindest als Teil eines Prompts weitergibt und eine Vorhersage erzeugt, ob eine unerlaubte Aufnahme/Kameranutzung erfolgt.

In einem dritten Schritt S3 wird dann geprüft, ob so eine Vorhersage gegeben ist. Ist das nicht der Fall, wiederholen sich die vorherigen Schritte S1-S2 kontinuierlich oder in diskreten Zeitabständen. Ist es der Fall, wird in einem vierten Schritt ein Alarm ausgelöst. Das kann akustisch über Lautsprecher sein und/oder visuell mit einem Alarmlicht oder allein aufgrund des Abschaltens/Abdunkelns des Bildschirms des Laptops L sein, welches aufgrund des Hinweises erfolgt und zu einem zweiten Zustand Z2 führt, in dem die Abdunklung so lange erhalten bleibt, bis eine Entwarnung, beispielsweise durch die Bedienperson, erfolgt.

*Unabhängig vom grammatikalischen Geschlecht eines bestimmten Begriffes sind Personen mit männlicher, weiblicher oder anderer Geschlechteridentität mit umfasst.*

## Patentansprüche

1. Verfahren zum Schutz vor Bildaufnahmen eines schützenswerten Inhalts,
**gekennzeichnet durch** folgende Schritte:
a) Erfassen von zumindest Teilen eines einen Blick auf den schützenswerten Inhalt erlaubenden Bereichs durch zumindest einen Sensor,
b) Weiterleiten von zumindest Teilen der erfassten Sensordaten an ein KI-Modul,
c) Auswerten der Sensordaten durch das KI-Modul zur Ermittlung von zumindest mit einer Anwesenheit und/oder Ausrichtung einer, beispielsweise als digitale, insbesondere in einem Handy integrierten, ersten Kamera ausgestalteten Bildaufnahmevorrichtung korrelierenden Daten,
d) Durchführen einer Unterdrückungsaktion in Abhängigkeit der Datenauswertung derart, dass eine Bildaufnahme des schützenswerten Inhalts unterbunden wird, wenn die Datenauswertung auf einen unerlaubten Aufnahmevorgang zumindest hinweist.

2. Verfahren nach einem der vorhergehenden Ansprüche, **dadurch gekennzeichnet, dass** der Sensor derart betrieben wird, dass eine künstliche Infrarotlichtquelle detektiert werden kann.

3. Verfahren nach einem der vorhergehenden Ansprüche, **dadurch gekennzeichnet, dass** eine Blitzvorrichtung derart betrieben wird, dass sie zumindest temporär, insbesondere zu sich wiederholenden Zeitpunkten, ausgelöst wird, wobei der Sensor derart mit den Auslösezeitpunkten synchron betrieben wird, dass Reflektionen des Blitzes erfasst werden.

4. Verfahren nach dem vorhergehenden Anspruch, **dadurch gekennzeichnet, dass** das Erfassen derart durchgeführt wird, dass als Sensor mindestens eine Linse einer zweiten Kamera derart betrieben wird, dass die Kameralinse zumindest temporär in einem ersten Zeitraum, insbesondere zu diskreten Zeitpunkten, zumindest eine Aufnahme von dem Bereich macht, wobei als Sensordaten die Aufnahme an das KI-Modul weitergeleitet wird, wobei der erste Zeitraum zumindest teilweise mit einer gegebenen Wiedergabe des Inhalts übereinstimmt.

5. Verfahren nach dem vorhergehenden Anspruch, **dadurch gekennzeichnet, dass** als den Sensor betreibende zweite Kamera mindestens eine zumindest funktional mit einer den schützenswerten Inhalt wiedergebenden Einrichtung verbundene Kamera zur Erfassung zumindest temporär betrieben wird.

6. Verfahren nach dem vorhergehenden Anspruch, **dadurch gekennzeichnet, dass** die zweite Kamera derart platziert und betrieben wird, dass die Kamera im Bezug zum schützenswerten Inhalt derart platziert und betrieben wird, dass sie zumindest Teile des schützenswerten Inhalts erfassen kann.

7. Verfahren nach einem der beiden vorhergehenden Ansprüche, **dadurch gekennzeichnet, dass** die zweite Kamera derart im Bezug zu der Einrichtung platziert wird und, insbesondere physisch mit ihr verbunden, derart betrieben wird, dass die mindestens eine Linsenöffnung in der gleichen Ebene angeordnet ist wie die Wiedergabe des schützenswerten Inhalts.

8. Verfahren nach einem der vorhergehenden Ansprüche, **dadurch gekennzeichnet, dass** die Ermittlung von zumindest mit einer die Anwesenheit und/oder Ausrichtung einer Bildaufnahmevorrichtung korrelierenden Daten derart erfolgt, dass das KI-Modul, ein trainiertes, insbesondere multimodales, LLM derart betreibt, dass es mit einem zumindest aus den Sensordaten gebildeten Prompt derart aufgerufen wird, dass eine Vorhersage über die Anwesenheit und/oder Ausrichtung ausgegeben wird.

9. Verfahren nach dem vorhergehenden Anspruch, **dadurch gekennzeichnet, dass** das LLM derart trainiert wird, dass es eine den Bereich des schützenswerten Inhalts zumindest teilweise erfassende Kameralinse der ersten Kamera vorhersagt.

10. Verfahren nach einem der beiden vorhergehenden Ansprüche, **dadurch gekennzeichnet, dass** das LLM derart trainiert wird, dass die Vorhersage des Bereichs zumindest durch eine anhand der Bildaufnahme detektierten Reflexion eines, insbesondere durch eine ortsfeste Quelle, beispielsweise die Blitzeinrichtung, emittierten Lichts erfolgt.

11. Verfahren nach einem der drei vorhergehenden Ansprüche, **dadurch gekennzeichnet, dass** das LLM derart trainiert wird, dass es den Betriebszustand der Kameralinse der ersten Kamera vorhersagt.

12. Verfahren nach dem vorhergehenden Anspruch, **dadurch gekennzeichnet, dass** die LLM derart trainiert wird, dass die Vorhersage des Betriebszustands mindestens anhand von in der Bildaufnahme detektierbaren Infrarotpunkten erfolgt.

13. Verfahren nach Anspruch 8, **dadurch gekennzeichnet, dass** mindestens eine zur zweiten Kamera disjunkte, mit einer Einrichtung zur Steuerung, zu deren Steuerung und/oder Bildauswertung verbundene, weitere Kamera derart betrieben wird, dass sie das LLM mit Aufnahmen derart aufruft, dass das LLM eine Vorhersage über die Anwesenheit und/oder Ausrichtung der ersten Kamera trifft.

14. Verfahren nach einem der vorhergehenden Ansprüche, **dadurch gekennzeichnet, dass** die Unterdrückungsaktion derart erfolgt, dass die den schützenswerten Inhalt wiedergebende Einrichtung derart manipuliert wird, dass solange ein Hinweis auf eine unerlaubte Aufnahme besteht, die Wiedergabe des zu schützenden Inhalts ausbleibt.

15. Verfahren nach einem der vorhergehenden Ansprüche, **dadurch gekennzeichnet, dass** die Unterdrückungsaktion mit folgenden Schritten durchgeführt wird:
a) Identifizieren einer Kommunikationsverbindung zu der ersten Kamera,
b) Bilden einer zumindest mit einem Steuersignal korrelierenden Nachricht,
c) Versenden der korrelierenden Nachricht,
d) Empfangen der korrelierenden Nachricht durch eine zur Beeinflussung der Funktion der ersten Kamera ausgebildete Einrichtung,
e) Manipulieren der Funktion durch die beeinflussende Einrichtung derart, dass das Bilden einer den Inhalt wiedergebenden Aufnahme verhindert wird.

16. Verfahren nach einem der vorhergehenden Ansprüche, **dadurch gekennzeichnet, dass** bei vorliegendem Hinweis auf unerlaubte Aufnahme mindestens ein Warnsignal ausgegeben wird, visuell, insbesondere auf der wiedergebenden Einrichtung, und/oder akustisch über eine Lautsprechereinrichtung.

17. Anordnung zum Schutz vor Bildaufnahmen eines schützenswerten Inhalts
**gekennzeichnet durch** Mittel zur Durchführung des Verfahrens nach einem der vorhergehenden Ansprüche.
